# EUROPÄISCHE PATENTSCHRIFT

(11) **EP 0 972 560 B1**
(45) Veröffentlichungstag und Bekanntmachung des Hinweises auf die Patenterteilung: **01.10.2003**
(21) Anmeldenummer: 99890127.6
(22) Anmeldetag: 15.04.1999
(51) Int. Cl.: B01F 3/04, B01D 53/79, B01D 47/06, B01D 53/86, B01D 53/56

(54) **Verfahren und Vorrichtung zur intensiven Vermischung von Reaktionsmedien**
Process and apparatus for intensively mixing of reactants
Procédé et dispositif pour le mélange intensif de réactants

(30) Priorität: 16.07.1998 AT 122798
(43) Veröffentlichungstag der Anmeldung: 19.01.2000
(73) Patentinhaber: INTEGRAL UMWELT- UND ANLAGENTECHNIK GESSELLSCHAFT m.b.H., A-1040 Wien (AT)
(72) Erfinder: Aspalter, Ansgar, 1220 Wien (AT); Lechner, Christian Dipl. Ing., 8233 Lafnitz (AT); Budin, Richard Ing., 2511 Pfaffstätten (AT); Reiter, Robert Ing., 3400 Klosterneuburg (AT); Krotla, Krzysztof Dipl.Ing., 1070 Wien (AT); Wenzl, Helmut Ing., 1210 Wien (AT)
(74) Vertreter: Atzwanger, Richard, Dipl.-Ing. Patentanwalt

(56) Entgegenhaltungen:
- WO-A-97/01387
- WO-A-99/41492
- DE-A- 3 335 543
- US-A- 4 756 890

## Beschreibung

Die gegenständliche Erfindung betrifft ein Verfahren zum Einbringen mindestens eines zweiten Reaktionsmediums in mindestens ein in einem Kanal strömendes, erstes Reaktionsmedium und zur intensiven Vermischung der Reaktionsmedien miteinander, wobei das mindestens eine zweite Reaktionsmedium an mehreren über einen Querschnitt des Strömungskanals verteilten Stellen in das mindestens eine erste Reaktionsmedium eingebracht wird und das mindestens eine erste Reaktionsmedium in den Bereichen des Einbringens des mindestens einen zweiten Reaktionsmediums verwirbelt wird, wodurch eine intensive Vermischung der Reaktionsmedien miteinander erfolgt.

Die gegenständliche Erffndung betrifft insbesondere ein Verfahren zur Entfernung von in den bei der Verfeuerung von fossilen Brennstoffen bzw. bei der Verbrennung von Reststoffen entstehenden Abgasen enthaltenen Schadstoffen, insbesondere von Stickoxiden, durch Reduktion unter Verwendung eines Katalysators, wobei in die Abgase mindestens ein Reduktionsmedium eingebracht wird, welches mit den Abgasen vermischt wird, und die Reduktionsmedien enthaltenden Abgase über den Katalysator geleitet werden, wodurch die Schadstoffe in umweltneutrale Gase umgewandelt werden und die Schadstoffe enthaltenden Abgase in den Bereichen des Einbringens des Reduktionsmedius verwirbelt werden, wodurch eine intensive Vermischung der Abgase mit dem Reduktionsmedium bewirkt wird.
Die gegenständliche Erfindung betrifft weiters auch eine Vorrichtung zur Durchführung dieser Verfahren.

In der chemischen Verfahrenstechnik besteht oftmals das Erfordernis, in mindestens ein strömendes, erstes Reaktionsmedium mindestens ein zweites Reaktionsmedium einzubringen und die beiden Reaktionsmedien über eine kurze Strecke miteinander intensiv zu vermischen. Dieses Erfordernis besteht beispielsweise bei der Verfeuerung von fossilen Brennstoffen, wie Kohle, Gas, Öl, sowie bei der Verbrennung von Reststoffen, wobei Schadstoffe, insbesondere Stickoxide, erzeugt werden, welche aus den Abgasen entfernt werden müssen. Hierfür ist es bekannt, in die Abgase ein Reduktionsmittel einzubringen und hierauf die mit dem Reduktionsmittel intensiv vermischten Abgase über einen Katalysator zu leiten, wodurch die Schadstoffe in umweltneutrale Gase umgewandelt werden. Diese Reaktionen erfolgen bei Temperaturen von etwa 150° C bis etwa 450° C.
Durch dieses Verfahren können z.B. NO und NO₂ durch Beimischung von NH₃ in N₂ und H₂O umgewandelt werden.

Für dieses Prinzip bei der Abscheidung von NOₓ an einem Katalysator gelten die folgenden reaktionskinetischen Grundlagen:
Adsorption eines gasförmigen Ammoniakmoleküls an einem Vanadinsäuremolekühl;
Bildung eines Ammonium-meta-Vanadat-Komplexes;
Reaktion des Ammonium-meta-Vanadat-Komplexes mit einem Stickoxidmolekül;
Desorption der Reaktionsprodukte;
Oxidation des Katalysators in seinen aktiven Ausgangszustand mit Hilfe des Sauerstoffes im Abgas.

Es wird hierzu darauf verwiesen, daß die Wirkung dieses Verfahrens einerseits vom Grad der Vermischung der Ammoniak- und der Stickoxidmoleküle und andererseits von deren homogener Verteilung im gesamten Strom der Abgase stark abhängig ist.

Um den Erfordernissen der Vermischung mit und der Verteilung eines Reduktionsmittels in Abgasen zu entsprechen, ist es bekannt, den Abgaskanal mit in diesen einragenden Lanzen auszubilden, welche mit einer Vielzahl von Düsen ausgestattet sind, wobei die einzelnen Düsenlanzen einzeln angespeist werden. Dabei besteht jedoch weiterhin das Erfordernis, zwischen den Stellen des Eintrittes des Reduktionsmittels in die Abgase und dem Katalysator einen hinreichend großen Abstand vorzusehen, um hierdurch die erforderliche gute Vermischung der Reaktionsmedien miteinander zu erzielen. Je größer dabei der Abstand zwischen dem Eintritt des Reduktionsmittels und dem Katalysator ist, desto größer ist der Grad der Vermischung.

Um den Grad der Vermischung weiter zu verbessern, ist es zudem bekannt, im Abgaskanal statische Mischeinrichtungen, wie z.B. Schikanen zur Umlenkung der mit Reduktionsmittel vermischten Abgase, vorzusehen oder Heizeinrichtungen anzuordnen. Diese bekannten Maßnahmen sind jedoch deshalb nachteilig, da sie einerseits einen zusätzlichen Aufwand bedingen und da sie andererseits zusätzlichen Raum erfordern.

Aus der WO 97/01387 ist es weiters bekannt, dem ersten Reaktionsmedium eine drallförmige Strömung zu erteilten, in welche das zweite Reaktionsmedium eingebracht wird. Ähnliche Verfahren und Vorrichtungen sind auch aus der DE 3335543 Al und aus der US-A-4756890 bekannt.
Durch diese Verfahren und Vorrichtungen wird aufgrund der Wirbelströmung eine gute Vermischung der Reaktionsmedien miteinander erzielt.

Ausgehend von diesem Stand der Technik liegt der gegenständlichen Erfindung die Aufgabe zugrunde, Maßnahmen zu treffen, durch welche in einfacher Weise eine weitaus intesivere Vermischung der Reaktionsmedien miteinander bewirkt wird.

Dies wird erfindungsgemäß dadurch erzielt, daß in dem mindestens einen ersten Reaktionsmedium durch in dieses quer zu dessen Strömungsrichtung einragende Prallbleche ein Unterdruck erzeugt wird, durch welches dessen Verwirbelung bewirkt wird.

Insbesondere liegt der gegenständlichen Erfindung die Aufgabe zugrunde, ein Verfahren zur Reinigung von bei der Verbrennung von Materialien entstehenden Abgasen zu schaffen, durch welches der Aufwand an zusätzlichen Einrichtungen möglichst gering gehalten wird und durch welches eine so intensive Vermischung der Reduktionsmittel mit den Abgasen gewährleistet wird, daß die Abgase unmittelbar hierauf über den Katalysator geleitet werden können, ohne daß hierdurch die Wirksamkeit in der Reduktion beeinträchtigt wird.

Dies wird erfindungsgemäß dadurch erzielt, daß in den Abgasen durch in diese quer zu deren Strömungsrichtung einragende Prallbleche ein Unterdruck erzeugt wird, durch welche deren Verwirbelung erfolgt.

Ferner wird diese Aufgade nach der Erfindung durch die Vorrichtung gemäß Patentanspruch 3 gelöst.
Vorteilhafte Weiterbildungen der Erfindung sind Gegenstand der abhängigen Ansprüche.

Eine erfindungsgemäße Vorrichtung zur Durchführung dieses Verfahrens enthält einen Kanal zur Führung mindestens eines ersten Reaktionsmediums, insbesondere von Schadstoffen enthaltenden Abgasen, mit im Kanal befindlichen Düsenöffnungen zum Einbringen mindestens eines zweiten Reaktionsmediums in das mindestens eine erste Reaktionsmedium und mit einem in Strömungsrichtung der Reaktionsmedien dahinter befindlichen Katalysator, durch welchen eine Reaktion der Medien, insbesondere. eine Reduktion der in den Abgasen enthaltenen Schadstoffe, bewirkt wird, wobei erfindungsgemäß den Düsen zum Einbringen des mindestens einen zweiten Reaktionsmediums in das mindestens eine erste Reaktionsmedium quer einragende Prallbleche zugeordnet sind. Vorzugsweise sind die Düsenöffnungen im Bereich der freien Enden von Rohrstücken für das Einbringen des mindestens einen zweiten Reaktionsmediums angeordnet, wobei die Prallbleche an den Rohrstücken befestigt sind.

Nach weiteren bevorzugten Merkmalen sind in an sich bekannter Weise im Kanal mehrere quer zum Kanal ausgerichtete Rohre für die Zuleitung des mindestens einen zweiten Reaktionsmediums vorgesehen, von welchen Rohrstücke abragen, deren freie Enden mit mindestens einer Düsenöffnung ausgebildet sind und ist jedes Rohrstück im Bereich der mindestens einen Düsenöffnung mit einem quer abragenden Prallblech ausgebildet, wobei sich die Prallbleche in Strömungsrichtung des mindestens einen ersten Reaktionsmediums jeweils vor der mindestens einen Düsenöffnung befinden. Dabei können die Rohrstücke mit der Längsrichtung des Kanals einen Winkel von etwa 30° bis etwa 60°, vorzugsweise von 45°, einschließen und können die Prallbleche von den Rohrstücken im rechten Winkel abragen.

Nach weiteren bevorzugten Merkmalen erstrecken sich die Prallbleche über zumindest einen Bereich von 10 % des Querschnittes des Strömungskanals für das mindestens eine erste Reaktionsmedium. Weiters können in den Kanal mehrere rostartig ausgebildete Leitungen für die Zuleitung des mindestens einen zweiten Reaktionsmediums einragen, von welchen die mit den Düsenöffnungen und Prallblechen ausgebildeten Rohrstücke abragen.

Der Gegenstand der Erfindung ist nachstehend anhand eines in der Zeichnung dargestellten Ausführungsbeispiels näher erläutert. Es zeigen:
- Fig. 1: einen Abgaskanal, in schematischer Darstellung,
- Fig. 2: diesen Abgaskanal, im Schnitt nach der Linie A-A der Fig. 1, und
- Fig. 3: das Detail B der Fig. 1, in gegenüber Fig. 1 vergrößertem Maßstab.

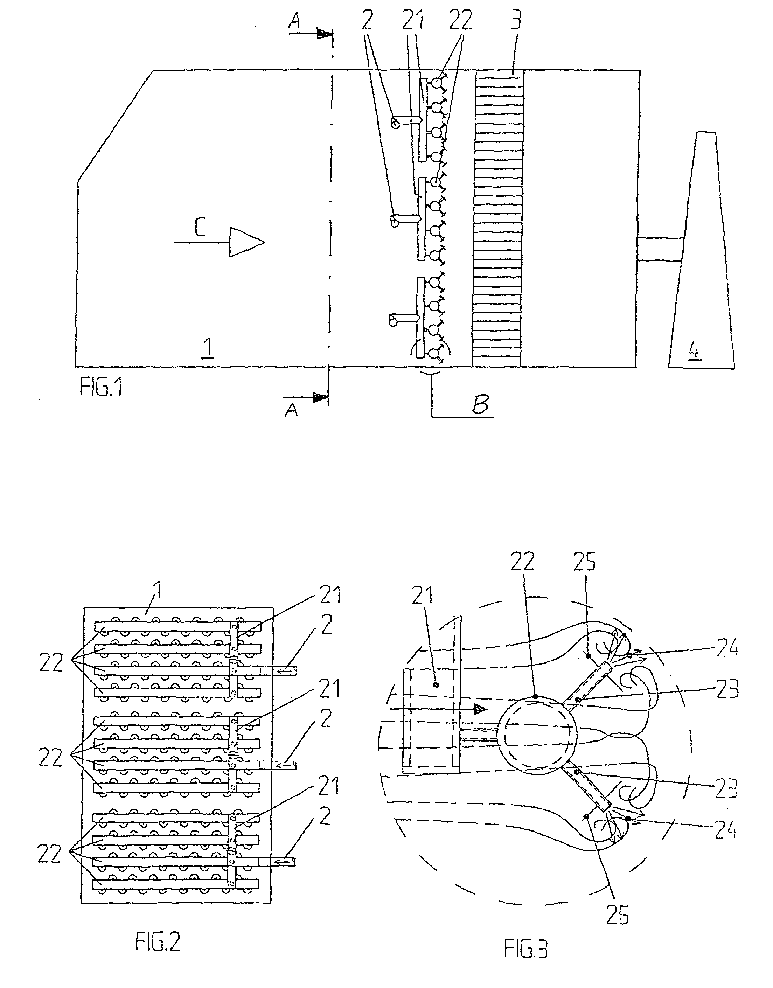

Wie dies aus den Fig. 1 und 2 ersichtlich ist, ist ein Kanal 1 vorgesehen, in welchen von einem Verbrennungsraum her Abgase der Verbrennung von fossilen Brennstoffen oder von Reststoffen eingeleitet werden und welcher von diesen Abgasen in Richtung des Pfeiles C durchströmt wird. Da diese Abgase eine Vielzahl von Schadstoffen, insbes. Stickoxide, enthalten, müssen sie einer Reinigung unterzogen werden. Die in den Kanal einströmenden Abgase weisen eine Temperatur von 150° C bis 450° C auf.

In den Kanal 1 ragen mehrere Zuleitungen 2 ein, an welche erste Verteilerrohre 21 anschließen, von welchen zweite Verteilerrohre 22 abgehen. Wie dies aus Fig. 3 ersichtlich ist, ragen von den Verteilerrohren 22 Rohrstücke 23 ab, deren freie Enden als Düsenöffnungen 24 ausgebildet sind. Aus den Düsenöffnungen 24 werden über die Verteilerrohre 21 und 22 zugeführte Reduktionsmittel in die durch den Kanal 1 strömenden Abgase eingebracht. Weiters sind an den Rohrstücken 23 in Strömungsrichtung C gesehen vor den Düsenöffnungen 24 quer abragende Prallbleche 25 befestigt.

Dadurch, daß die Prallbleche 25 quer zur Strömung C der Abgase ausgerichtet sind, bewirken sie jeweils an ihrer der Strömungsrichtung abgewandten Seite einen Bereich, in welchem ein Unterdruck erzeugt wird. Hierdurch erfolgt im Bereich des Eintrittes des Reduktionsmittels in den Abgasstrom eine starke Verwirbelung der Abgase, wodurch diese mit dem Reduktionsmittel intensiv vermischt werden. Da hierdurch die Abgase mit dem Reduktionsmittel optimal vermischt werden, können sie unmittelbar hierauf über einen Katalysator 3 geleitet werden. Da die Schadstoffe am Katalysator 3 in umweltneutrale Gase umgewandelt werden, können die Abgase über einen anschließend vorgesehenen Kamin 4 an die freie Atmosphäre abgegeben werden.

Somit sind ein Verfahren und eine Vorrichtung geschaffen, mit welchen eine optimale Vermischung von Reaktionsmedien bewirkt wird, ohne daß hierfür zusätzliche Mischeinrichtungen vorgesehen zu sein brauchen und bei welchen die Mischstrecke sehr kurz sein kann, ohne daß hierdurch die Wirksamkeit der gewünschten Reaktion beeinträchtigt wird.
Insbesondere sind ein Verfahren und eine Vorrichtung geschaffen, mit welchen eine optimale Reinigung von Abgasen bewirkt wird, ohne daß hierfür im Abgaskanal Mischeinrichtungen vorgesehen zu sein brauchen und bei welchen der Katalysator sehr nahe an den Düsenöffnungen zum Einbringen des Reduktionsmittels angeordnet werden kann, ohne daß hierdurch die Wirksamkeit der Reinigung beeinträchtigt wird.

## Patentansprüche

1. Verfahren zum Einbringen mindestens eines zweiten Reaktionsmediums in mindestens ein in einem Kanal (1) strömendes, erstes Reaktionsmedium und zur intensiven Vermischung der Reaktionsmedien miteinander, wobei das mindestens eine zweite Reaktionsmedium an mehreren über einen Querschnitt des Strömungskanals (1) verteilten Stellen in das mindestens eine erste Reaktionsmedium eingebracht wird und das mindestens eine erste Reaktionsmedium in den Bereichen des Einbringens des mindestens einen zweiten Reaktionsmediums verwirbelt wird, wodurch eine intensive Vermischung der Reaktionsmedien miteinander erfolgt, **dadurch gekennzeichnet, daß** in dem mindestens einen ersten Reaktionsmedium durch in dieses quer zu dessen Strömungsrichtung (C) einragende Prallbleche (25) ein Unterdruck erzeugt wird, durch welches dessen Verwirbelung bewirkt wird.

2. Verfahren nach Patentanspruch 1 zur Entfernung von in den bei der Verfeuerung von fossilen Brennstoffen bzw. bei der Verbrennung von Reststoffen entstehenden Abgasen enthaltenen Schadstoffen, insbesondere von Stickoxiden, durch Reduktion unter Verwendung eines Katalysators (3), wobei in die Abgase mindestens ein Reduktionsmedium eingebracht wird, welches mit den Abgasen vermischt wird, und weiters die das Reduktionsmedium enthaltenden Abgase über den Katalysator geleitet werden, wodurch die Schadstoffe in umweltneutrale Gase umgewandelt werden, wobei die Schadstoffe enthaltenden Abgase in den Bereichen des Einbringens des Reduktionsmediums verwirbelt werden, wodurch eine intensive Vermischung der Abgase mit dem Reduktionsmedium bewirkt wird, **dadurch gekennzeichnet, daß** in den Abgasen durch in diese quer zu deren Strömungsrichtung (C) einragende Prallbleche (25) ein Unterdruck erzeugt wird, durch welche deren Verwirbelung erfolgt.

3. Vorrichtung zur Durchführung des Verfahrens nach einem der Patentansprüche 1 und 2 mit einem Kanal (1) zur Führung mindestens eines strömenden ersten Reaktionsmediums, insbes. von Schadstoffen enthaltenden Abgasen, mit im Kanal (1) befindlichen Düsenöffnungen (24) zum Einbringen mindestens eines zweiten Reaktionsmediums in das mindestens eine erste Reaktionsmedium, insbes. zum Einbringen von Reduktionsmedien in Abgase, und mit einem in Strömungsrichtung (C) der Reaktionsmedien dahinter befindlichem Katalysator (3), durch welchen eine Reaktion der Medien, insbes. eine Reduktion der in den Abgasen enthaltenen Schadstoffe, bewirkt wird, **dadurch gekennzeichnet, daß** den Düsenöffnungen (24) zum Einbringen des mindestens einen zweiten Reaktionsmediums in den Strom des mindestens einen ersten Reaktionsmediums quer einragende Prallbleche (25) zugeordnet sind.

4. Vorrichtung nach Patentanspruch 3, **dadurch gekennzeichnet, daß** die Düsenöffnungen im Bereich der freien Enden von Rohrstücken (23) für das Einbringen des mindestens einen zweiten Reaktionsmediums angeordnet sind, wobei die Prallbleche (25) an den Rohrstücken (23) befestigt sind.

5. Vorrichtung nach einem der Patentansprüche 3 und 4, **dadurch gekennzeichnet, daß** in an sich bekannter Weise im Kanal mehrere quer zum Kanal ausgerichtete Rohre (2) für die Zuleitung des mindestens einen zweiten Reaktionsmediums vorgesehen sind, von welchen Rohrstücke (23) abragen, deren freie Enden jeweils mit mindestens einer Düsenöffnung (24) ausgebildet sind und daß jedes Rohrstück (23) im Bereich der mindestens einen Düsenöffnung (24) mit einem quer abragenden Prallblech (25) ausgebildet ist, wobei sich die Prallbleche (25) in Strömungsrichtung (C) des mindestens einen ersten Reaktionsmediums jeweils vor der mindestens einen Düsenöffnung (24) befinden.

6. Vorrichtung nach einem der Patentansprüche 4 und 5, **dadurch gekennzeichnet, daß** die Rohrstücke (23) mit der Längsrichtung des Kanals (1) einen Winkel von etwa 30° bis etwa 60°, vorzugsweise von 45°, einschließen und die Prallbleche (25) von den Rohrstücken (23) im rechten Winkel abragen.

7. Vorrichtung nach einem der Patentansprüche 3 bis 6, **dadurch gekennzeichnet, daß** sich die Prallbleche (25) über zumindest einen Bereich von 10% des Querschnittes des Strömungskanals (1) für das mindestens eine erste Reaktionsmedium, insbes. der Abgase, erstrecken.

8. Vorrichtung nach einem der Patentansprüche 3 bis 7, **dadurch gekennzeichnet, daß** in den Kanal (1) mehrere rostartig ausgebildete Leitungen (21, 22) für die Zuleitung des mindestens einen zweiten Reaktionsmediums einragen, von welwelchen die mit den Düsenöffnungen (24) und Prallblechen (25) ausgebildeten Rohrstücke (23) abragen.

## Claims

1. Process for introducing at least one second reaction medium into at least one first reaction medium flowing in a channel (1) and for intensive mixing of the reaction media with one another, the at least one second reaction medium being introduced at a plurality of positions distributed over a cross section of the flow channel (1) into the at least one first reaction medium, and turbulence being induced in the at least one first reaction medium in the regions where the at least one second reaction medium is introduced, as a result of which intensive mixing of the reaction media with one another takes place, **characterized in that** a reduced pressure is produced in the at least one first reaction medium by deflectors (25) projecting into it transversely to its flow direction (C), as a result of which turbulence is reduced therein.

2. Process according to Patent Claim 1 for the removal of pollutants, in particular nitrogen oxides, contained in exhaust gases produced in the firing of fossil fuels or in the incineration of waste, by reduction with the use of a catalyst (3), at least reducing medium being introduced into the exhaust gases and being mixed with the exhaust gases, and furthermore the exhaust gases containing the reducing medium being fed over the catalyst, as a result of which the pollutants are converted into environmentally neutral gases, turbulence being induced in the exhaust gases containing pollutants in the regions where the reducing medium is introduced, as a result of which intensive mixing of the exhaust gases with the reducing medium is brought about, **characterized in that** a reduced pressure is produced in the exhaust gases by deflectors (25) projecting into them transversely to their flow direction (C), as a result of which turbulence is induced therein.

3. Device for carrying out the process according to one of Patent Claims 1 and 2 having a channel (1) for transporting at least one first flowing reaction medium, in particular exhaust gases containing pollutants, having nozzle apertures (24) which are located in the channel (1) and are intended for the introduction of at least one second reaction medium into the at least one first reaction medium, in particular for the introduction of reducing agents into exhaust gases, and having a catalyst (3) which is located downstream in the flow direction (C) of the reaction media and as a result of which a reaction is brought about between the media, in particular reduction of the pollutants contained in the exhaust gases, **characterized in that** transversely projecting deflectors (25) are assigned to the nozzle apertures (24) for the introduction of the at least one second reaction medium into the flow of the at least one first reaction medium.

4. Device according to Patent Claim 3, **characterized in that** the nozzle apertures are arranged in the region of the free ends of tubular pieces (23) for the introduction of the at least one second reaction medium, the deflectors (25) being fastened to the tubular pieces (23).

5. Device according to one of Patent Claims 3 and 4, **characterized in that** a plurality of tubes (2) which are aligned transversely with respect to the channel and are intended for feeding the at least one second reaction medium, and from which tubular pieces (23) whose free ends are respectively designed with at least one nozzle aperture (24) project, are arranged in a manner known per se in the channel, and **in that** each tubular piece (23) is designed with a transversely projecting deflector (25) in the region of the at least one nozzle aperture (24), the deflectors (25) being respectively located upstream of the at least one nozzle aperture (24) in the flow direction (C) of the at least one first reaction medium.

6. Device according to one of Patent Claims 4 and 5, **characterized in that** the tubular pieces (23) make an angle of about 30° to about 60°, preferably 45°, with the longitudinal direction of the channel (1), and the deflectors (25) project at right angles from the tubular pieces (23).

7. Device according to one of Patent Claims 3 to 6, **characterized in that** the deflectors (25) extend over at least a 10% region of the cross section of the flow channel (1) for the at least one first reaction medium, in particular the exhaust gases.

8. Device according to one of Patent Claims 3 to 7, **characterized in that** a plurality of lines (21, 22) designed in the form of a grille for feeding the at least one second reaction medium project into the channel (1), and the tubular pieces (23) designed with the nozzle apertures (24) and deflectors (25) project from these.

## Revendications

1. Procédé pour faire se rencontrer au moins un deuxième milieu réactionnel et au moins un premier milieu réactionnel affluent dans un canal (1) et pour mélanger de façon intensive les mélanges réactionnels entre eux, dans lequel au moins un deuxième milieu réactionnel est introduit à plusieurs endroits répartis sur une section transversale du canal (1) du courant dans au moins un premier milieu réactionnel et dans lequel au moins un premier milieu réactionnel est rendu tourbillonnant dans la zone de rentrée d'au moins un deuxième milieu réactionnel, par le moyen duquel est produit un mélange intensif des milieux réactionnels entre eux, **caractérisé en ce que** dans au moins un premier milieu réactionnel une dépression est engendrée par des déflecteurs (25) qui s'élèvent dans celui-ci en travers de sa direction d'écoulement (C), grâce à laquelle son tourbillonnement est obtenu.

2. Procédé selon la revendication 1 pour éliminer les polluants contenus dans des gaz d'échappement provenant de la combustion de combustibles fossiles respectivement de l'incinération de déchets, en particulier des oxydes d'azote, par réduction avec utilisation d'un catalyseur (3), dans lequel au moins un milieu réducteur est introduit dans les gaz d'échappement, lequel est mélangé avec les gaz d'échappement, et ensuite les gaz d'échappement contenant le milieu réducteur sont dirigés vers le catalyseur, par le moyen duquel les polluants sont transformés en gaz neutres pour l'environnement, dans lequel les gaz d'échappement contenant des polluants sont rendus tourbillonnants dans la zone de rentrée du milieu réducteur, par le moyen duquel est produit un mélange intensif des gaz d'échappement avec le milieu réducteur, **caractérisé en ce que** dans les gaz d'échappement une dépression est engendrée par des déflecteurs (25) qui s'élèvent dans ceux-ci en travers de leur direction d'écoulement (C), grâce à laquelle leur tourbillonnement est obtenu.

3. Dispositif pour réaliser le procédé selon l'une quelconque des revendications 1 et 2 avec un canal (1) pour l'amenée d'au moins un premier milieu réactionnel affluent en particulier des gaz d'échappement contenant des polluants, avec des orifices de sortie (24) situés dans le canal (1) pour la rencontre d'au moins un deuxième milieu réactionnel dans au moins un premier milieu réactionnel, en particulier pour la rencontre d'un milieu réducteur dans des gaz d'échappement, et avec un catalyseur (3) qui se trouve après, dans la direction de flux (C) des milieux de réaction, grâce auquel une réaction des milieux est provoquée, en particulier une réduction des polluants contenus dans les gaz d'échappement, **caractérisé en ce que** les orifices de sortie (24) sont disposés pour faire rencontrer au moins un deuxième milieu réactionnel dans le flux d'au moins un premier milieu réactionnel au travers de déflecteurs (35) rentrants.

4. Dispositif selon la revendication 3, **caractérisé en ce que** les orifices de sortie sont disposés dans la zone des extrémités libres des pièces tubulaires (23) pour la rencontre d'au moins un deuxième milieu réactionnel, dans lequel les déflecteurs (25) sont fixés sur les pièces tubulaires (23).

5. Dispositif selon l'une quelconque des revendications 3 et 4, **caractérisé en ce qu'**il est prévu dans la conduite, de la manière la plus connue, plusieurs conduits (2) orientés en travers de la conduite pour alimenter au moins un deuxième milieu réactionnel, desquels s'élèvent des pièces tubulaires (23), dont les extrémités libres sont conçues à chaque fois avec au moins un orifice de sortie (24) et que chaque pièce tubulaire (23) est située dans la zone d'au moins un orifice de sortie (24) avec un déflecteur (25) qui s'élève en travers, dans lequel le déflecteur (25) se trouve dans la direction de flux (C) d'au moins un premier milieu de réaction à chaque fois devant au moins un orifice de sortie (24).

6. Dispositif selon l'une quelconque des revendications 4 et 5, **caractérisé en ce que** les pièces tubulaires (23) font un angle avec la direction longitudinale du canal (1) d'environ 30 ° à 60 °, de préférence de 45 °, et le déflecteur (25) s'élève à angle droit des pièces tubulaires (23).

7. Dispositif selon l'une quelconque des revendications 3 à 6, **caractérisé en ce que** le déflecteur (25) s'étend au moins sur une zone égale à 10 % de la section transversale du canal de courant (1) d'au moins un premier milieu réactionnel, en particulier les gaz d'échappement.

8. Dispositif selon l'une quelconque des revendications 3 à 7, **caractérisé en ce que**, dans le canal (1), plusieurs conduites (21, 22) conçues en forme de grille s'élèvent pour l'alimentation d'au moins un deuxième milieu réactionnel, desquelles s'élèvent les pièces tubulaires (23) munies d'orifices de sortie (24) et de déflecteurs (25).
